# EUROPÄISCHE PATENTSCHRIFT

(11) **EP 1 458 895 B1**
(45) Veröffentlichungstag und Bekanntmachung des Hinweises auf die Patenterteilung: **09.01.2008**
(21) Anmeldenummer: 02802629.2
(22) Anmeldetag: 23.10.2002
(51) Int. Cl.: C21B 13/00, C21B 13/14, F27B 15/10, F27B 15/00, B01J 8/24

(54) **VERFAHREN UND VORRICHTUNG ZUR BEHANDLUNG EINES FEINTEILCHENFÖRMIGEN, INSBESONDERE METALLHALTIGEN, EINSATZMATERIALES**
METHOD AND DEVICE FOR TREATING A FINE-PARTICLED FEEDSTOCK ESPECIALLY CONTAINING METAL
PROCEDE ET DISPOSITIF POUR TRAITER UNE CHARGE SOUS FORME DE FINES PARTICULES ET NOTAMMENT METALLIFERE

(30) Priorität: 09.11.2001 AT 17732001
(43) Veröffentlichungstag der Anmeldung: 22.09.2004
(73) Patentinhaber: Siemens VAI Metals Technologies GmbH & Co, 4031 Linz (AT); Posco, Nam-ku, Pohang-shi, Kyungsangbuk-do 790-300 (KR); Research Institute of Industrial Science and Technology, Incorporated Foundation, Pohang City 790-330 (KR)
(72) Erfinder: ZIRNGAST, Johann, A-4614 Marchtrenk (AT); ZSCHETZSCHE, Albert, A-4100 Ottensheim (AT)
(74) Vertreter: Maier, Daniel Oliver
(86) Internationale Anmeldenummer: PCT/EP2002/011828
(87) Internationale Veröffentlichungsnummer: WO 2003/040417

(56) Entgegenhaltungen:
- EP-A- 0 092 622
- WO-A-96/12045
- US-A- 5 368 824

## Beschreibung

Die Erfindung betrifft ein Verfahren zur Behandlung eines feinteilchenförmigen, insbesondere metallhaltigen, Einsatzstoffes, wobei der Einsatzstoff und ein Behandlungsgas, insbesondere ein Reduktionsgas, zur Bildung einer Wirbelschicht in eine Wirbelschichtkammer, beispielsweise in einen Wirbelschichtreaktor, eingeleitet werden. Die Erfindung betrifft weiters ein Aggregat zum Betrieb einer Wirbelschicht, beispielsweise einen Wirbelschichtreaktor.

Die Effizienz eines Wirbelschichtprozesses kann unter anderem über die Zusammensetzung des Behandlungsgases sowie über die Temperatur in der Wirbelschicht gesteuert werden.

Aus dem Stand der Technik ist bekannt, die Temperatur eines Behandlungsgases eines Wirbelschichtprozesses durch geeignete Maßnahmen, beispielsweise durch Beimischen eines Kühlgases auf ein zur Anwendung geeignetes Temperaturniveau einzustellen.

Es ist eine Aufgabe der vorliegenden Erfindung ein Verfahren nach dem Oberbegriff des Anspruchs 1, sowie eine Vorrichtung nach dem Oberbegriff des Anspruchs 10 weiter zu entwickeln, durch welche eine besonders effiziente und damit wirtschaftliche Form der thermischen Beeinflussung eines Wirbelschichtprozesses erreicht werden kann.

Diese Aufgabe wird erfindungsgemäß entsprechend dem erfindungsgemäßen Verfahren nach dem kennzeichnenden Teil des Anspruchs 1 sowie entsprechend der erfindungsgemäßen Vorrichtung nach dem kennzeichnenden Teil des Anspruchs 8 gelöst.

Das vorgestellte Verfahren eignet sich besonders bevorzugt zur Behandlung, insbesondere zur Reduktion, eines feinteilchenförmigen Metalloxides, insbesondere eines feinteilchenförmigen Eisenoxides. Die Erfindung ist jedoch nicht auf eine solche Anwendung beschränkt, weshalb alle Ausführungen zur Reduktion als beispielhaft zu sehen sind.

Die genannten speziellen Ausführungen gelten, mit den entsprechenden, dem Fachmann zumutbaren, Anpassungen für alle anderen, insbesondere äquivalenten, industriellen Behandlungen bei welchen ein Wirbelschichtprozess zum Einsatz gelangt. Beispielsweise kann die Erfindung auch im Bereich der Zementindustrie angewendet werden.

Nach einer besonderen Ausführungsform des erfindungsgemäßen Verfahrens bildet sich die Wirbelschicht in einem Teilabschnitt, insbesondere in einem unteren Teilabschnitt, der Wirbelschichtkammer aus und/oder wird das zumindest teilweise umgesetzte Behandlungsgas innerhalb der Wirbelschichtkammer, vorzugsweise oberhalb der Wirbelschicht, verwertet, und/oder wird das zumindest teilweise verwertete Behandlungsgas, vorzugsweise oberhalb der Wirbelschicht, aus der Wirbelschichtkammer abgeführt.

Nach einer bevorzugten Ausführungsform des erfindungsgemäßen Verfahrens wird in der Wirbelschichtkammer oberhalb des Wirbelbettes eine Einrichtung zur Verwertung des zumindest teilweise in der Wirbelschicht umgesetzten Behandlungsgases, beispielsweise ein Sauerstoffbrenner und/oder eine Sauerstoffdüse, betrieben, wobei bei der zumindest teilweisen Verwertung, insbesondere bei einer, gegebenenfalls exothermen, Oxidation, des Behandlungsgases, thermische Energie erzeugt oder verbraucht wird.

Nach einer bevorzugten Ausführungsform des erfindungsgemäßen Verfahrens wird die thermische Energie oberhalb der Wirbelschicht in der Wirbelschichtkammer erzeugt oder verbraucht.

Nach einer bevorzugten Ausführungsform des erfindungsgemäßen Verfahrens wird oberhalb der Wirbelschicht erzeugte oder verbrauchte thermische Energie oberhalb der Wirbelschicht in die Wirbelschichtkammer eingebracht oder aus der Wirbelschichtkammer oberhalb der Wirbelschicht entnommen.

Nach einer bevorzugten Ausführungsform des erfindungsgemäßen Verfahrens wird, gegebenenfalls über die oberhalb der Wirbelschicht in der Wirbelschichtkammer angeordnete Einrichtung zur Verwertung des Behandlungsgases, zur Verwertung des Behandlungsgases ein Oxidationsmittel, beispielsweise Sauerstoff und/oder Luft, direkt in die Wirbelschichtkammer oberhalb der Wirbelschicht eingebracht.

Nach einer bevorzugten Ausführungsform des erfindungsgemäßen Verfahrens wird, gegebenenfalls über die oberhalb der Wirbeischicht in der Wirbelschichtkammer angeordnete Einrichtung zur Verwertung des Behandlungsgases, das zumindest teilweise umgesetzte Behandlungsgas, insbesondere Reduktionsgas, in der Wirbelschichtkammer oberhalb der Wirbelschicht zumindest teilweise verbrannt, insbesondere zumindest teilweise oxidiert.

Eine Verbrennung stellt beispielsweise eine chemische Reaktion zur Gewinnung von thermischer Energie, beispielsweise eine exotherme Oxidation dar.

Nach einer bevorzugten Ausführungsform des erfindungsgemäßen Verfahrens wird feinteilchenförmiger Einsatzstoff, welcher aus der Wirbelschicht austritt und sich insbesondere zumindest zeitweise oberhalb der Wirbelschicht befindet, gegebenenfalls durch das oberhalb der Wirbelschicht in der Wirbelschichtkammer geführte zumindest teilweise verwertete, insbesondere verbrannte und/oder oxidierte und/oder erwärmte, Behandlungsgas und/oder durch die Einrichtung zur Verwertung des Behandlungsgases selbst, zumindest teilweise erwärmt oder gekühlt.

Nach einer besonderen Ausführungsform des erfindungsgemäßen Verfahrens ist in der Wirbelschichtkammer oberhalb der Wirbelschicht ein Zyklon angeordnet, wobei der feinteilchenförmige Einsatzstoff im Bereich des Zyklons, insbesondere des Zykloneinlasses, durch das oberhalb der Wirbelschicht in der Wirbelschichtkammer geführte zumindest teilweise verwertete, insbesondere oxidierte und/oder erwärmte, Behandlungsgas und/oder durch die Einrichtung zur Verwertung des Behandlungsgases selbst erwärmt oder gekühlt wird.

Nach einer besonderen Ausführungsform des erfindungsgemäßen Verfahrens wird der, sich oberhalb der Wirbelschicht aufhaltende, erwärmte oder gekühlte feinteilchenförmige Einsatzstoff zumindest teilweise in die Wirbelschicht eingebracht, insbesondere rezykliert.

Die Erfindung ist weiters durch eine Vorrichtung gemäß Anspruch 8 vorzugsweise zur Durchführung eines Verfahrens nach einem oder mehreren der Ansprüche 1 bis 7, gekennzeichnet.

Nach einer bevorzugten Ausführungsform der erfindungsgemäßen Vorrichtung ist die in der Wirbelschichtkammer oberhalb der Wirbelschicht angeordnete Einrichtung zur Verwertung des Behandlungsgases zur Einbringung eines flüssigen und/oder festen Verbrennungsmittels, vorzugsweise eines Oxidationsmittels und/oder eines Sauerstoffträgers, besonders bevorzugt von Sauerstoff und/oder Luft, in die Wirbelschichtkammer eingerichtet.

Nach einer bevorzugten Ausführungsform der erfindungsgemäßen Vorrichtung ist die oberhalb der Wirbelschicht in der Wirbelschichtkammer angeordnete Einrichtung zur Verwertung des Behandlungsgases im Bereich der Splash-Zone angeordnet, sodass der, sich im Bereich der Splash-Zone aufhaltende, feinteilchenförmige Einsatzstoff durch die Einrichtung selbst und/oder durch das zumindest teilweise verwertete, insbesondere oxidierte und/oder erwärmte, Behandlungsgas zumindest teilweise erwärmbar oder kühlbar ist.

Die Splash-Zone kennzeichnet dabei jenen Teil des Freiraumes über dem Wirbelbett, in dem es zu einem Auswurf von feinen Feststoffpartikeln kommt, die nachfolgend zumindest teilweise wiederum in die Wirbelschicht zurückfallen.

Nach einer besonderen Ausführungsform der erfindungsgemäßen Vorrichtung weist das Aggregat einen Zyklon auf, der oberhalb der Wirbelschicht in der Wirbelschichtkammer angeordnet ist, wobei an den Zyklonauslass gegebenenfalls ein Dipleg anschließt, der in die Wirbelschicht reicht, und wobei weiters die oberhalb der Wirbelschicht in der Wirbelschichtkammer angeordnete Einrichtung zur Verwertung des Behandlungsgases auf Höhe des Zyklons, insbesondere des Zykloneinlasses, angeordnet ist, und der feinteilchenförmige Ensatzstoff im Bereich des Zyklons, insbesondere des Zykloneinlasses, durch die Einrichtung selbst und/oder durch das zumindest teilweise verwertete, insbesondere oxidierte, erwärmte Behandlungsgas zumindest teilweise erwärmbar oder kühlbar ist.

Ein Dipleg stellt nach einer besonderen Ausführungsform der Erfindung eine Einrichtung zur Rückführung von in einem Zyklon abgeschiedenen Material in eine Wirbelschicht dar.

In verschiedenen Wirbelschichtreduktionsverfahren wird das chargierte Erz im Gegenstrom in 3 bis 4 Wirbelschichtreaktoren erhitzt und reduziert. Dabei wird das Temperaturprofil über den Wärmeinhalt des Reduktionsgases und die Reaktionswärmen eingestellt.

Die Prozessführung des Wärmehaushaltes eines entsprechenden Verfahrens ist deshalb nur in engen Grenzen veränderbar.

Aus dem Stand der Technik ist eine externe Vorwärmung des Reduktionsgases bekannt, diese erweist sich jedoch als unwirtschaftlich. Die partielle Verbrennung von Reduktionsgas vor der Wirbelschicht verschlechtert das Reduktionspotential des Reduktionsgases und damit die erzielbare Reduktionsarbeit.

In umfangreichen Versuchen zum Einsatz von Brennern, insbesondere von Sauerstoffbrennem, in Wirbelschichtaggregaten hat sich herausgestellt, dass im allgemeinen durch die hohe Partikelkonzentration im Wirbelschichtaggregat im Bereich der Flamme Verschlackungen auftreten, die den Wirbelschichtprozess destabilisieren. Außerdem ist in diesem Bereich eine verläßliche Flammenüberwachung und Zündhilfe sehr schwierig zu realisieren.

Durch die vorliegende Erfindung wird eine Optimierung des Energiehaushaltes, insbesondere des Energieeintrages, herbeigeführt.

Nach dem erfindungsgemäßen Verfahren wird nach einer besonderen Ausführungsform der Erfindung zur Erhöhung der Wirbelschichttemperatur zumindest ein Sauerstoffbrenner über der Wirbelschicht angebracht. Gegenüber herkömmlichen Brennern zeichnet sich der erfindungsgemäße Sauerstoffbrenner dadurch aus, dass die Verbrennung, insbesondere die Oxidation, des Behandlungsgases, insbesondere des Reduktionsgases, vor dem Sauerstoffbrenner, bereits in der Wirbelschichtkammer stattfindet. Der Sauerstoffbrenner stellt in seiner einfachsten Ausführungsform eine Düse zur Zufuhr eines Sauerstoffträgers in die Wirbelschichtkammer dar.

Nach einer besonderen Ausführungsform des erfindungsgemäßen Verfahrens umfasst der Begriff eines Sauerstoffträgers definitionsgemäß alle Sauerstoff enthaltenden und alle, unter den, in der Wirbelschichtkammer, herrschenden Umgebungsbedingungen zur zumindest teilweisen Oxidation des Behandlungsgases und/oder des feinteilchenförmigen Einsatzstoffes, sauerstoffbereitstellenden und/oder -freisetzenden Stoffe, also insbesondere reinen Sauerstoff und/oder Luft.

Nach einer besonderen Ausführungsform der Erfindung werden, infolge des Partikelauswurfes aus der Wirbelschicht, die Partikel im Freiraum über der Wirbelschicht durch den Sauerstoffbrenner aufgewärmt und dann wieder in die Wirbelschicht zurückfallen.

Nach einer besonderen Ausführungsform der Erfindung werden die Partikel bzw. Staub, der weiter erwärmt wird, am einem gegebenenfalls vorhandenen Zyklon abgeschieden und wieder in die Wirbelschicht rückgeführt.

Im Gegensatz zum Konzept der Gaserwärmung vor der Wirbelschicht wird nach einer besonderen Ausführungsform der Erfindung mit der vorgestellten Anordnung das Reduktionspotential des Reduktionsgases erst nach der Wirbelschicht verschlechtert. Dadurch kann das Reduktionspotential des Gases bei erhöhter Bettemperatur genutzt werden. Eine hohe Gastemperatur am Eintritt des Arbeitsgases in den Reaktor wird verhindert. Auf diese Weise wird den bekannten Problemen des Auftretens von Anbackungen an den Verteilerböden entgegengewirkt.

Weiter wird die Gefahr des Auftretens von Verschlackungen (Anbackungen) im Bereich der Wirbelschicht bzw. der Wirbelschichtkammer durch die geringere Partikelkonzentration im Flammenbereich reduziert.

· Folgende besondere Vorteile sind durch den Erfindungsgegenstand realisierbar.
- Effiziente und einfache Flammenüberwachung und Zündhilfe
- Bessere und gleichmäßigere Behandlung, insbesondere Reduktion, durch Erhöhung der Wirbelbetttemperatur bei annähernd gleichbleibender Qualität des Behandlungsgases
- Effiziente und einfache Beeinflussung des Temperaturprofiles der Wirbelschicht
- Höhere Standzeiten des Verteilerbodens
- Höhere Produktivität durch bessere Effizienz des Wirbelschichtverfahrens

Besonders effizient stellt sie die vorgestellte Erfindung bei Anwendung in einem Verfahren mit mehreren parallel und/oder seriell betriebenen Wirbelschichten dar, da hier die einzelnen Wirbelschichten hinsichtlich der Temperaturführung besonders flexibel aufeinander abgestimmt werden können.

Nach einer besonderen Ausführungsform der Erfindung ist es möglich die Wirbelschichtreaktion, beispielsweise die Reduktion des feinen Metalloxides, in der Wirbelschicht vor der weiteren Verwertung des Behandlungsgases, beispielsweise einer Teilverbrennung, durchzuführen und trotzdem die Temperatur in der Wirbelschicht, insbesondere durch rückgeführte Teilchen, vorzugsweise des feinteilchenförmigen Einsatzstoffes, zu steuern.

Die Rückführung erfolgt entsprechend besonderer Ausführungsformen der Erfindung einerseits durch eine Zyklonrückführung, beispielsweise über einen Dipleg, und/oder andererseits durch Zurückfallen der aus der Wirbelschicht ausgeworfenen Teilchen. Nach diesen Ausführungsformen wird eine Erwärmung der Wirbelschicht erreicht, ohne dass das Behandlungsgas vor oder während der Reaktion im Wirbelbett beeinflusst wird.

Die Erfindung ist nachfolgend, entsprechend einer besonderen, nicht-einschränkenden, Ausführungsform, anhand einer schematischen Zeichnung dargestellt. Es zeigt:

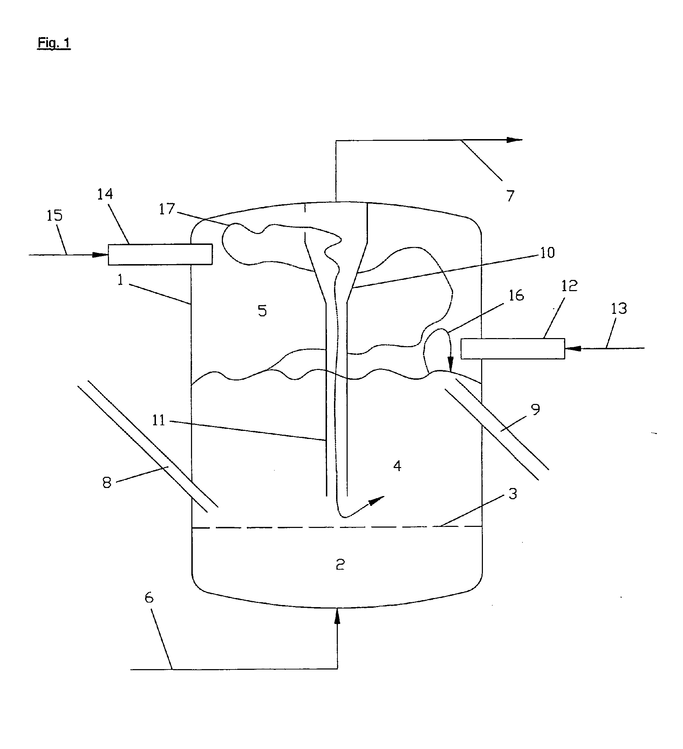

Fig. 1 ein Verfahren zur Behandlung eines feinteilchenförmigen, insbesondere metallhaltigen, Einsatzstoffes

Nach Fig. 1 ist ein Aggregat 1 zum Betrieb einer Wirbelschicht, beispielsweise ein Wirbelschichtreaktor, dargestellt, das eine Windkammer 2 sowie eine Wirbelschichtkammer zur Aufnahme einer Wirbelschicht 4 und eines Freiraumes 5 aufweist. Weiters weist das Aggregat 1 einen Verteilerboden 3 zur Verteilung des Behandlungsgases 6, insbesondere eines Reduktionsgases, auf.

Dem Aggregat 1 wird über eine Leitung 8 ein feinteilchenförmiger Einsatzstoff, insbesondere Eisenoxid zugeführt, der in zumindest teilweise behandelter Form über eine Leitung 9 wiederum entnommen wird.

In dem Aggregat 1 ist ein Zyklon 10, sowie ein Dipleg 11 angeordnet, der zur Abscheidung des Staubes bzw. des feinen Einsatzstoffes dient und diesen in die Wirbelschicht 4 rezykliert. Die Wirbelschicht 4 selbst verhält sich, wie dem Fachmann bekannt, ähnlich einer kochenden Flüssigkeit und ist nach obenhin durch eine definierte, in der Figur schematisch dargestellte, Oberfläche, wenn auch unscharf, begrenzt. Direkt oberhalb dieser unscharfen Grenze befindet sich die sogenannte Splash-Zone, die sich dadurch auszeichnet, dass darin feine Partikel auftreten, die aus der Wirbelschicht ausgeworfen werden und nachfolgend wieder in diese zurückfallen.

In der Wirbelschichtkammer ist ein Sauerstoffbrenner 12 zur Zufuhr von Sauerstoff 13 in die Wirbelschichtkammer oberhalb der Wirbelschicht 4 angeordnet. Nach eine besonderen Ausführungsform befindet sich der Sauerstoffbrenner selbst in der Splash-Zone (wie in Fig. 1 dargestellt) oder dient jedenfalls zum direkten Wärmeeintrag in die Splashzone. Ein Teilchen 16 wird durch den Sauerstoffbrenner 12 in der Splash-Zone erwärmt, bevor es in die Wirbelschicht zurückfällt, und deshalb zur Erwärmung derselben beiträgt.

Nach einer weiteren Ausführungsform der Erfindung ist im Bereich des Zyklons 10, insbesondere des Zykloneinlasses ein Brenner 14 zur Zufuhr eines Sauerstoffträgers 15 vorgesehen.

Auf diese Weise wird Behandlungsgas in der Wirbelschichtkammer verbrannt und oberhalb der Wirbelschicht 4 Wärme erzeugt, die beispielsweise über die im Zyklon 10 abgeschiedenen Feststoffpartikel durch den Dipleg 11 direkt zur Erwärmung bzw. Durchwärmung der Wirbelschicht 4 dient.

Beispielhaft ist durch die den Pfeil 17 der Weg eines feinen Feststoffpartikels aus der Wirbelschicht 4 über die Splash-Zone in den Freiraum 5 skizziert, der durch den Sauerstoffbrenner 14 entsprechend erwärmt und über den Zyklon 10 und den Dipleg 11 in die Wirbelschicht 4 rezykliert wird.

Das zumindest teilweise umgesetzte Behandlungsgas wird über eine Leitung 7 wiederum abgeleitet.

## Patentansprüche

1. Verfahren zur Behandlung eines feinteilchenförmigen, insbesondere metallhaltigen, Einsatzstoffes, wobei der Einsatzstoff und ein Behandlungsgas, insbesondere ein Reduktionsgas, zur Bildung einer Wirbelschicht in eine Wirbelschichtkammer, beispielsweise in einen Wirbelschichtreaktor, eingeleitet werden, wobei in der-Wirbelschichtkammer oberhalb der Wirbelschicht ein Zyklon angeordnet ist, **dadurch gekennzeichnet, dass** das Behandlungsgas nach einer zumindest teilweisen Umsetzung in der Wirbelschicht aus der Wirbelschicht abgeführt wird und nachfolgend außerhalb der Wirbelschicht durch eine, insbesondere exotherme, chemische Reaktion mit einem Reaktanden, vorzugsweise mit einem gasförmigen und/oder flüssigen Oxidationsmittel, zumindest teilweise verwertet, vorzugsweise oxidiert, wird, wobei in der Wirbelschichtkammer oberhalb des Wirbelbeltes eine Einrichtung zur Verwertung des zumindest teilweise in der Wirbelschicht umgesetzten Behandlungsgases, beispielsweise ein Sauerstoffbrenner und/oder eine Sauerstaffdüse, betrieben wird und wobei die thermische Energie der chemischen Reaktion zumindest teilweise in die Wubelschich*tkammer, insbesondere in die Wirbelschicht, eingebracht oder aus dieser abgeführt wird, wobei der feinteilchenförmige Einsatzstoff im Bereich des Zyklons, insbesondere des Zykloneinlasses, durch das oberhalb der Wirbelschicht in der Wirbelschichtkammer geführte zumindest teilweise verwertete, insbesondere erwärmte oder gekühlte, Behandlungsgas und/oder durch die Einrichtung zur Verwertung des Behandlungsgases selbst, erwärmt oder gekühlt wird.

2. Verfahren nach Anspruch 1, **dadurch gekennzeichnet, dass** sich die Wirbelschicht in einem Teilabschnitt, insbesondere in einem unteren Teilabschnitt, der Wirbelschichtkammer ausbildet und das zumindest teilweise umgesetzte Behandlungsgas Innerhalb der Wirbelschichtkammer, vorzugsweise oberhalb der Wirbelschicht, verwertet wird, und das zumindest teilweise verwertete Behandlungsgas, vorzugsweise oberhalb der Wirbelschicht, aus der Wirbelschichtkammer abgeführt wird.

3. Verfahren nach einem oder mehreren der Ansprüche 1 oder 2, **dadurch gekennzeichnet, dass** die thermische Energie oberhalb der Wirbelschicht in der Wirbelschichtkammer erzeugt oder verbraucht wird.

4. Verfahren nach einem oder mehreren der Ansprüche 1 bis 3, **dadurch gekennzeichnet, dass**, gegebenenfalls über die oberhalb der Wirbelschicht in der Wirbelschichtkammer angeordnete Einrichtung zur Verwertung des Behandlungsgases, zur Verwertung des Behandlungsgases ein Oxidationsmittel, beispielsweise Sauerstoff und/oder Luft, direkt in die Wirbelschichtkammer oberhalb der Wirbelschicht eingebracht wird.

5. Verfahren nach einem oder mehreren der Ansprüche 1 bis 4, **dadurch gekennzeichnet, dass**, gegebenenfalls durch die oberhalb der Wirbelschicht in der Wirbelschichtkammer angeordnete Einrichtung zur Verwertung des Behandlungsgases, das zumindest teilweise umgesetzte Behandlungsgas, insbesondere Reduktionsgas, in der Wirbelschichtkammer oberhalb der Wirbelschicht zumindest teilweise verbrannt, insbesondere zumindest teilweise oxidiert, wird.

6. Verfahren nach einem oder mehreren der Ansprüche 1 bis 5, **dadurch gekennzeichnet, dass** feinteilchenformiger Einsatzstoff, welcher aus der Wirbelschicht austritt und sich zumindest zeitweise oberhalb der Wirbelschicht befindet, gegebenenfalls durch das oberhalb der Wirbelschicht in der Wirbelschichtkammer geführte und zumindest teilweise verwertete Behandlungsgas und/oder durch die Einrichtung zur Verwertung des Behandlungsgases selbst erwärmt oder gekühlt wird.

7. Verfahren nach Anspruch 5 oder 6, **dadurch gekennzeichnet, dass** der, sich oberhalb der Wirbelschicht äufhattende, erwärmte oder gekühlte feintelichenförmige Einsatzstoff zumindest teilweise in die Wirbelschicht eingebracht wird.

8. Aggregat zum Betrieb einer Wirbelschicht, beispielsweise zur Reduktion eines feinteilchenförmigen Eisenoxides, das
• gegebenenfalls einen Verteilerboden (3) zur Verteilung eines Behandlungsgases, insbesondere eines Reduktionsgases, sowie
• eine Leitung (8) zur Zuleitung eines, insbesondere fluidisierbaren, feinteifchenformigen Einsatzstoffes, insbesondere eines feinteilchenförimigen Metalloxides, und
• eine Leitung (9) zur Ableitung des behandelten Einsatzstoffes und
• eine Leitung (6) zur Einleitung des Behandlungsgases und
• eine Leitung (7) zur Ableitung des Behandlungsgases und
• eine Wirbelschichtkammer (1) zur Aufnahme der Wirbelschicht (4) und
• einen Zyklon (10), der oberhalb der Wirbelschicht (4) in der Wirbelschichtkammer (1) angeordnet ist, wobei an den Zyklonauslass gegebenenfalls ein Dipleg (11) anschließt der in die Wirbelschicht (1) reicht,
aufweist, **dadurch gekennzeichnet, dass**, in der Wirbelschichtkammer oberhalb des Wirbelbettes (4), eine Einrichtung (12) zur Verwertung des zumindest teilweise umgesetzten Behandlungsgases der Wirbelschicht vorgesehen ist, über welche der Wirbelschicht (4) thermische Energie einbringbar oder abführbar ist, wobei die oberhalb der Wirbelschicht (4) in der Wirbelschichtkammer (1) angeordnete Einrichtung zur Verwertung des Behandlungsgases auf Höhe des Zyklons (10), insbesondere des Zykloneinlasses, angeordnet ist, und der feinteilchenförmige Einsatzstoff im Bereich des Zyklons (10), insbesondere des Zykloneinlasses, durch die Einrichtung (12) selbst und/oder durch das zumindest teilweise verwertete, insbesondere oxidierte, Behandlungsgas erwärmbar oder kühlbar ist

9. Aggregat nach Anspruch 8, **dadurch gekennzeichnet, dass** die in der Wirbelschichtkammer (1) oberhalb der Wirbelschicht angeordnete - Einrichtung zur Verwertung des Behandlungsgases zur Einbringung eines flüssigen und/oder festen Oxidationsmftels, vorzugsweise eines Sauerstoffträgers, besonders bevorzugt von Sauerstoff und/oder Luft, in die Wirbelschichtkammer eingerichtet ist.

10. Aggregat nach Anspruch 8 oder 9, **dadurch gekennzeichnet, dass** die oberhalb der Wirbelschicht in der Wirbelschichtkammer angeordnete Einrichtung zur Verwertung des Behandlungsgases im Bereich der Splash-Zorie der Wirbelschicht angeordnet ist, sodass der, sich im Bereich der Solash-Zone aufhatterde, feinteilchenförmige Einsatzstoff durch die Einrichtung selbst und/oder durch das zumindest teilweise verwertete, insbesondere oxidierte, Behandlungsgas erwärmbar oder kühlbar ist

## Claims

1. Process for treating a finely particulate, in particular metal-containing, charge material, the charge material and a treatment gas, in particular a reduction gas, being introduced into a fluidized-bed chamber, for example into a fluidized-bed reactor, in order to form a fluidized bed, a cyclone being arranged in the fluidized-bed chamber above the fluidized bed, **characterized in that** the treatment gas is discharged from the fluidized bed after an at least partial reaction in the fluidized bed and is subsequently at least partially reprocessed, preferably oxidized, outside the fluidized bed by an, in particular exothermic, chemical reaction with a reactant, preferably with a gaseous and/or liquid oxidizing agent, a device for reprocessing the treatment gas which has at least partially reacted in the fluidized bed, for example an oxygen burner and/or an oxygen nozzle, being operated in the fluidized-bed chamber above the fluidized bed and the thermal energy from the chemical reaction being at least partially introduced into or discharged from the fluidized-bed chamber, in particular into the fluidized bed, the finely particulate charge material being heated or cooled in the region of the cyclone, in particular of the cyclone inlet, by the treatment gas, which is guided above the fluidized bed in the fluidized-bed chamber and has been at least partially reprocessed, in particular heated or cooled, and/or by the device for reprocessing the treatment gas itself.

2. Process according to Claim 1, **characterized in that** the fluidized bed forms in a partial section, in particular in a lower partial section, of the fluidized-bed chamber, and the at least partially reacted treatment gas is reprocessed within the fluidized-bed chamber, preferably above the fluidized bed, and the at least partially reprocessed treatment gas is discharged from the fluidized-bed chamber, preferably above the fluidized bed.

3. Process according to one or more of Claims 1 and 2, **characterized in that** the thermal energy is generated or consumed above the fluidized bed in the fluidized-bed chamber.

4. Process according to one or more of Claims 1 to 3, **characterized in that** an oxidizing agent, for example oxygen and/or air, is introduced directly into the fluidized-bed chamber above the fluidized bed, if appropriate via the device for reprocessing the treatment gas which is arranged above the fluidized bed in the fluidized-bed chamber, for the purpose of reprocessing the treatment gas.

5. Process according to one of Claims 1 to 4, **characterized in that** the at least partially reacted treatment gas, in particular reduction gas, is at least partially burnt, in particular at least partially oxidized, in the fluidized-bed chamber above the fluidized bed, if appropriate via the device for reprocessing the treatment gas which is arranged above the fluidized bed in the fluidized-bed chamber.

6. Process according to one or more of Claims 1 to 5, **characterized in that** finely particulate charge material which emerges from the fluidized bed and is at least at times located above the fluidized bed, is heated or cooled, if appropriate by the treatment gas, which is guided above the fluidized bed in the fluidized-bed chamber and has been at least partially reprocessed and/or by the device for reprocessing the treatment gas itself.

7. Process according to Claim 5 or 6, **characterized in that** the finely particulate charge material, which is situated above the fluidized bed and has been heated or cooled, is at least partially introduced into the fluidized bed.

8. Unit for operating a fluidized bed, for example, for the reduction of a finely particulate iron oxide, which comprises
· if appropriate a distributor base (3) for distributing a treatment gas, in particular a reduction gas, and
· a line (8) for supplying an, in particular fluidizable, finely particulate charge material, in particular a finely particulate metal oxide, and
· a line (9) for discharging the treated charge material and
· a line (6) for introducing the treatment gas and
· a line (7) for discharging the treatment gas and
· a fluidized-bed chamber (1) for accommodating the fluidized bed (4) and
· a cyclone (10) which is arranged above the fluidized bed (4) in the fluidized-bed chamber (1), a dipleg (11) which extends into the fluidized bed (1) adjoining the cyclone outlet if appropriate,
**characterized in that**, in the fluidized-bed chamber above the fluidized bed (4) there is arranged a device (12) for reprocessing the at least partially reacted treatment gas of the fluidized bed, via which the fluidized bed (4) can introduce or discharge thermal energy, the device for reprocessing the treatment gas which is arranged above the fluidized bed (4) in the fluidized-bed chamber (1) being arranged at the level of the cyclone (10), in particular the cyclone inlet, and it being possible for the finely particulate charge material, in the region of the cyclone (10), in particular of the cyclone inlet, to be heated or cooled by the device (12) itself and/or by the at least partially reprocessed, in particular oxidized, treatment gas.

9. Unit according to Claim 8, **characterized in that** the device for reprocessing the treatment gas which is arranged in the fluidized-bed chamber (1) above the fluidized bed is designed to introduce a liquid and/or solid oxidizing agent, preferably an oxygen carrier, particularly preferably oxygen and/or air, into the fluidized-bed chamber.

10. Unit according to Claim 8. or 9, **characterized in that** the device for reprocessing the treatment gas which is arranged above the fluidized bed in the fluidized-bed chamber is arranged in the region of the splash zone of the fluidized bed, so that the finely particulate charge material which is present in the region of the splash zone can be heated or cooled by the device itself and/or by the at least partially reprocessed, in particular oxidized, treatment gas.

## Revendications

1. Procédé de traitement d'une substance consommable en fines particules, qui contient en particulier des métaux, la substance consommable et un gaz de traitement, en particulier un gaz réducteur, étant introduits dans une chambre de fluidisation, par exemple un réacteur à lit fluidisé, pour former un lit fluidisé, un cyclone étant disposé au-dessus du lit fluidisé dans la chambre de fluidisation, **caractérisé en ce que** le gaz de traitement est évacué du lit fluidisé après avoir au moins en partie réagi dans le lit fluidisé et est ensuite au moins partiellement valorisé et de préférence oxydé à l'extérieur du lit fluidisé par une réaction chimique, en particulier exothermique, avec un réactif et de préférence avec un agent oxydant gazeux et/ou liquide, un dispositif de valorisation du gaz de traitement qui a réagi au moins en partie dans le lit fluidisé, par exemple un brûleur à oxygène et/ou une tuyère à oxygène, étant utilisé dans la chambre de fluidisation au-dessus du lit fluidisé et l'énergie thermique de la réaction chimique étant amenée au moins en partie dans la chambre de fluidisation et en particulier dans le lit fluidisé ou est évacuée de cette chambre de fluidisation, la substance consommable en fines particules étant chauffée ou refroidie dans la zone du cyclone et en particulier dans l'entrée du cyclone par le gaz de traitement au moins en partie valorisé et en particulier chauffé ou refroidi, amené au-dessus du lit fluidisé dans la chambre de fluidisation et/ou par le dispositif de valorisation du gaz de traitement proprement dit.

2. Procédé selon la revendication 1, **caractérisé en ce que** le lit fluidisé est formé dans une partie et en particulier dans une partie inférieure de la chambre de fluidisation et **en ce que** le gaz de traitement qui a réagi au moins en partie est valorisé à l'intérieur de la chambre de fluidisation et de préférence au-dessus du lit fluidisé et **en ce que** le gaz de traitement au moins en partie valorisé est évacué de la chambre de fluidisation, de préférence au-dessus du lit fluidisé.

3. Procédé selon l'une ou plusieurs des revendications 1 ou 2, **caractérisé en ce que** l'énergie thermique est dégagée ou consommée au-dessus du lit fluidisé dans la chambre de fluidisation.

4. Procédé selon l'une ou plusieurs des revendications 1 à 3, **caractérisé en ce que** pour valoriser le gaz de traitement, un agent oxydant, par exemple de l'oxygène et/ou de l'air, est apporté directement dans la chambre de fluidisation au-dessus du lit fluidisé, éventuellement par le dispositif de valorisation du gaz de traitement disposé au-dessus du lit fluidisé dans la chambre de fluidisation.

5. Procédé selon l'une ou plusieurs des revendications 1 à 4, **caractérisé en ce que** le gaz de traitement qui a réagi au moins en partie et en particulier le gaz réducteur est brûlé au moins en partie et en particulier oxydé au moins en partie dans la chambre de fluidisation, au-dessus du lit fluidisé, éventuellement par le dispositif de valorisation du gaz de traitement disposé au-dessus du lit fluidisé dans la chambre de fluidisation.

6. Procédé selon l'une ou plusieurs des revendications 1 à 5, **caractérisé en ce que** la substance consommable en fines particules qui sort du lit fluidisé et qui se trouve au moins une partie du temps au-dessus du lit fluidisé est éventuellement chauffée ou refroidie par le gaz de traitement amené au-dessus du lit fluidisé dans la chambre de fluidisation et au moins en partie valorisé, et/ou par le dispositif de valorisation du gaz de traitement proprement dit.

7. Procédé selon les revendications 5 ou 6, **caractérisé en ce que** la substance consommable en fines particules, chauffée ou refroidie et située au-dessus du lit fluidisé est amenée au moins en partie dans le lit fluidisé.

8. Installation de formation d'un lit fluidisé, en particulier pour la réduction d'un oxyde de fer en fines particules, qui présente :
- éventuellement un fond de répartition (3) qui répartit un gaz de traitement et en particulier un gaz réducteur,
- un conduit (8) qui amène une substance consommable en fines particules, en particulier fluidisable, et en particulier un oxyde métallique en fines particules,
- un conduit (9) d'évacuation de la substance consommable traitée,
- un conduit (6) qui introduit le gaz de traitement,
- un conduit (7) qui évacue le gaz de traitement,
- une chambre de fluidisation (1) qui reprend le lit fluidisé (4) et
- un cyclone (10) qui est disposé au-dessus du lit fluidisé (4) dans la chambre de fluidisation (1), une branche plongeante (11) qui s'enfonce dans le lit fluidisé (1) se raccordant éventuellement à la sortie du cyclone,
**caractérisée en ce que**
un dispositif (12) de valorisation du gaz de traitement du lit fluidisé qui a au moins en partie réagi est prévu dans la chambre de fluidisation au-dessus du lit fluidisé (4) et permet d'apporter ou d'évacuer de l'énergie thermique dans le lit fluidisé (4), le dispositif de valorisation du gaz de traitement disposé au-dessus du lit fluidisé (4) dans la chambre de fluidisation (1) étant disposé à la hauteur du cyclone (10) et en particulier de l'entrée du cyclone, la substance consommable en fines particules pouvant être chauffée ou refroidie dans la zone du cyclone (10) et en particulier de l'entrée du cyclone par le dispositif (12) proprement dit et/ou par le gaz de traitement au moins en partie valorisé et en particulier oxydé.

9. Installation selon la revendication 8, **caractérisée en ce que** le dispositif de valorisation du gaz de traitement disposé dans la chambre de fluidisation (1) au-dessus du lit fluidisé est conçu pour apporter un agent oxydant liquide et/ou solide, de préférence un porteur d'oxygène et de façon particulièrement préférable de l'oxygène et/ou de l'air dans la chambre de fluidisation.

10. Installation selon les revendications 8 ou 9, **caractérisée en ce que** le dispositif de valorisation du gaz de traitement disposé au-dessus du lit fluidisé dans la chambre de fluidisation est disposé dans la zone d'éclaboussures du lit fluidisé, de telle sorte que la substance consommable en fines particules qui est présente dans la zone d'éclaboussures puisse être chauffée ou refroidie par le dispositif proprement dit et/ou par le gaz de traitement au moins en partie valorisé et en particulier oxydé.
